# EUROPÄISCHE PATENTSCHRIFT

(11) **EP 1 045 179 B1**
(45) Veröffentlichungstag und Bekanntmachung des Hinweises auf die Patenterteilung: **24.03.2004**
(21) Anmeldenummer: 00102924.8
(22) Anmeldetag: 12.02.2000
(51) Int. Cl.: F16J 15/46

(54) **Dichtvorrichtung**
Sealing device
Dispositif d'étanchéité

(30) Priorität: 15.04.1999 DE 19916789
(43) Veröffentlichungstag der Anmeldung: 18.10.2000
(73) Patentinhaber: Fritsche-Möllmann GmbH & Co. KG, 49504 Lotte (DE)
(72) Erfinder: Krause, Herbert, 49497 Mettingen (DE); Giesker, Alois, 49124 Georgsmarienhütte (DE); Denker, Ernst, 49492 Westerkappeln (DE)
(74) Vertreter: Moldenhauer, Herbert

(56) Entgegenhaltungen:
- DE-A- 19 708 579
- FR-A- 1 038 573

## Beschreibung

Die Erfindung betrifft eine Dichtvorrichtung zur Abdichtung von zumindest zwei einander zugewandten Oberflächen zweier benachbarter Maschinenelemente, umfassend einen aufblähbaren Dichtschlauch, ein erstes und ein zweites Maschinenelement und ein Einsatzstück, wobei der Dichtschlauch in einer in der ersten Oberfläche des ersten Maschinenelements angeordneten und in Richtung der zweiten Oberfläche des zweiten Maschinenelements offenen Nut angeordnet ist, wobei der Dichtschlauch mit einem druckbaufschlagbaren Medium befüllbar und durch das Medium aufblähbar sowie an die zweite Oberfläche des zweiten Maschinenelements dichtend anlegbar ist und wobei die stirnseitigen Enden des Dichtschlauchs jeweils in dem Einsatzstück angeordnet sind.

Des weiteren betrifft die Erfindung eine Dichtvorrichtung zur Abdichtung von zumindest zwei einander zugewandten Oberflächen zweier benachbarter Maschinenelemente, umfassend einen aufblähbaren Dichtschlauch, der in einer in der ersten Oberfläche des ersten Maschinenelements angeordneten und in Richtung der zweiten Oberfläche des zweiten Maschinenelements offenen Nut angeordnet ist, wobei der Dichtschlauch von einer die Öffnung der Nut abdichtenden Schutzfolie überdeckt ist, wobei der Dichtschlauch mit einem druckbaufschlagbaren Medium befüllbar und durch das Medium aufblähbar sowie mittels der Schutzfolie an die zweite Oberfläche des zweiten Maschinenelements dichtend anlegbar ist und wobei die stirnseitigen Enden des Dichtschlauchs jeweils in einem Einsatzstück angeordnet sind.

### Stand der Technik

Eine Dichtvorrichtung der eingangs genannten Art ist aus der DE 197 08 579 A1 bekannt. Zumindest ein Ende des Dichtschlauchs ist im Bereich der Umlenkung von der Längsrichtung in die Querrichtung von einem anliegenden Einsatzstück umschlossen, daß in eine Ausnehmung des ersten Maschinenelements einfügbar ist. Ein solches Einsatzstück kann beispielsweise aus einem Formteil aus Kunststoff oder Metall bestehen. Die dem zweiten Maschinenelement zugewandte Oberfläche der Einsatzstücke überragt die erste Oberfläche des ersten Maschinenelements in Richtung des zweiten Maschinenelements und die Oberfläche des nicht-aufgeblähten Dichtschlauchs. Eine solche Ausführung ist notwendig, um bei aufgeblähtem Dichtschlauch eine durchgängige Anlagefläche zum Werkzeugoberteil zu erhalten.

### Darstellung der Erfindung

Der Erfindung liegt die Aufgabe zugrunde, eine Dichtvorrichtung der eingangs genannten Art derart weiterzuentwickeln, daß die einander zugewandten Oberflächen im wesentlichen eben ausgebildet sind.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, daß die Einsatzstücke jeweils als Hülse ausgebildet sind, die die stirnseitigen Enden des Dichtschlauches unter elastischer Vorspannung dichtend umschließen, wobei die Hülsen in jeweils einer Ausnehmung des ersten Maschinenelements angeordnet sind, die sich im wesentlichen quer zur Längsrichtung der Nut erstrecken und wobei der nicht-druckbeaufschlagte Dichtschlauch und die der zweiten Oberfläche des zweiten Maschinenelements jeweils zugewandte Stirnseite der Hülsen im wesentlichen bündig mit der ersten Oberfläche des ersten Maschinenelements abschließen. Hierbei ist von Vorteil, daß die erste Oberfläche des ersten Maschinenelements unter Vermeidung überstehender Einsatzstück eben ausgebildet ist. Eine zwischen die beiden Maschinenelemente eingelegte Schutzfolie liegt dadurch flächig und eben auf dem erste Maschinenelement auf. Eine Schutzfolie für den Dichtschlauch bildet beispielsweise das Oberflächenmaterial eines in einem Schäumwerkzeug herzustellenden Artikels, zum Beispiel eine Armaturentafel für ein Kraftfahrzeug. Durch die exakte Positionierung der Schutzfolie auf der ersten Oberfläche werden Störungen während der Herstellung, die die Qualität des Fertigteils erheblich beeinflussen können, vermieden. Dadurch, daß die erste Oberfläche, die Einsatzstücke und der nicht-druckbeaufschlagte Dichtschlauch oberflächenbündig zueinander angeordnet sind, ist eine ausreichende Kontaktfläche beispielsweise zu einer Schutzfolienoberfläche gegeben, um eine gute Abdichtung sicherzustellen.

Der aufblähbare Dichtschlauch besteht beispielsweise aus Gummi. Die Druckbeaufschlagung des Dichtschlauchs erfolgt nur, wenn die erste Oberfläche oder eine auf der ersten Oberfläche angeordnete Schutzfolie die zweite Oberfläche anliegend berührt, wobei die zweite Oberfläche das Widerlager für den aufgeblähten Dichtschlauch bildet.

Gelangt die Dichtvorrichtung beispielsweise in einem Formwerkzeug zur Anwendung, werden die beiden Werkzeughälften, die durch die beiden Maschinenelemente gebildet sind, solange aufeinander zubewegt, bis nur noch ein geringer Spalt zwischen den Oberflächen besteht. Anschließend wird das Werkzeug mit einer einzufüllenden Formmasse gefüllt, bis diese den Spalt erreicht. Die in dem Formwerkzeug enthaltenen Gase können dadurch bis zu diesem Zeitpunkt durch den Spalt entweichen. Im Anschluß daran wird der Schlauch aufgebläht und legt sich dadurch entlang der gesamten Länge der Nut an die zweite Oberfläche dichtend an. In der ersten Ausgestaltung der Dichtvorrichtung, in der der Dichtschlauch die zweite Oberfläche des zweiten Maschinenelements unmittelbar anliegend und dichtend berührt, ist die Formmasse so zu wählen, daß ein nachteiliges Verkleben mit dem Dichtsystem, insbesondere dem Dichtschlauch ausgeschlossen ist. Sobald der Dichtschlauch auch die zweite Oberfläche des zweiten Maschinenelements anliegend berührt, ist nachfolgend ein Druckaufbau im Formwerkzeug möglich.

Gelangt als Formmasse demgegenüber ein Material zur Anwendung, wie beispielsweise Polyurethan, muß das Dichtsystem vor Verunreinigung und einer Verklebung mit diesem Werkstoff geschützt werden. Dies geschieht gemäß der zweiten Ausgestaltung durch eine Schutzfolie, die flächig und eben auf der ersten Oberfläche aufliegt, den innerhalb der Nut angeordneten Dichtschlauch dichtend überdeckt und die der zweiten Oberfläche zugewandte Stirnseite der Hülse und die Oberfläche des Dichtschlauchs anliegend berührt. Eine Schutzfolie für den Dichtschlauch bildet beispielsweise das Oberflächenmaterial eines in einem Schäumwerkzeug herzustellenden Artikels, zum Beispiel eine Armaturentafel für ein Kraftfahrzeug. Der Zerstörung des Dichtsystems wird durch Verwendung der Schutzfolie vorgebeugt. Anhand eines Schäumwerkzeugs wird die Funktion des Dichtsystems nachfolgend erläutert:

Die auf die erste Oberfläche des Schäumwerkzeugunterteils aufgelegte Schutzfolie wird über Vakuum an der ersten Oberfläche gehalten und überdeckt den Dichtschlauch, der innerhalb der Nut angeordnet ist. Das Schaumgemisch wird in das Werkzeugunterteil eingefüllt, wobei das Schaumgemisch nur die Schutzfolie, nicht jedoch den Dichtschlauch berührt. Durch die Verwendung der Schutzfolie kann beispielsweise auch Polyurethan geschäumt werden, ohne daß das Dichtsystem durch Verkleben mit dem Werkstoff beschädigt würde. Die obere Werkzeughälfte wird solange auf die untere Werkzeughälfte zubewegt, bis nur noch ein geringer Spalt zwischen den beiden Oberflächen besteht. Das in der Werkzeugkavität befindliche Schaumgemisch expandiert. Hierdurch wird die Werkzeugkavität gefüllt. Bei diesem Füllvorgang wird das in der Werkzeugkavität befindliche Gas durch den geringen Spalt zwischen den beiden Oberflächen zwangsweise aus der Werkzeugkavität verdrängt. Wenn das Schaumgemisch in den Spaltbereich eindringt, wird - zeitlich gesteuert - die Druckbeaufschlagung des Dichtschlauchs aktiviert und der Spalt durch aufblähen des Dichtschlauchs, der sich zunächst an die Schutzfolie anlegt, allmählich geschlossen. Bei weiterer Druckbeaufschlagung dichtet die Schutzfolie gegen die zweite Oberfläche des Werkzeugoberteils ab. Durch das Abdichten des Spalts wird der Formhohlraum geschlossen und die beabsichtigte Verdichtung des Schaumgemischs erreicht.

Der aufgeblähte Dichtschlauch berührt das zweite Maschinenelement entlang seiner gesamten Ausdehnung entweder unmittelbar dichtend anliegend oder unter Zwischenfügung der Schutzfolie.

Der Dichtschlauch kann stirnseitig beiderseits jeweils ein Füllstück unter elastischer Vorspannung dichtend umschließen.

Ferner kann es vorgesehen sein, daß nur eines der Füllstücke eine leitungsförmige Ausnehmung aufweist, durch die das Medium in den Dichtschlauch einspeisbar ist. Der Luftanschluß an der der zweiten Oberfläche abgewandten Stirnseiten eine der Hülsen erfolgt beispielsweise direkt durch eine Bohrung im ersten Maschinenelement, wobei die Bohrung bevorzugt mit einem Anschlußgewinde für eine Versorgungsleitung versehen ist. Bei dem Medium, das in den Dichtschlauch eingespeist wird, handelt es sich bevorzugt um Druckluft.

Eine Entlastung des Dichtschlauchs erfolgt beispielsweise dadurch, daß ein Ventil innerhalb der Versorgungsleitung zur Atmosphäre hin geöffnet wird. Dadurch strömt das Medium durch die leitungsförmige Ausnehmung des Füllstücks und die Versorgungsleitung in Richtung Atmosphäre, wobei der Dichtschlauch seine nicht-druckbeaufschlagte Stellung wieder einnimmt.

Der Dichtschlauch kann außerhalb des Bereichs seiner Einspannung von den Füllstücken abhebbar und an die Innenseite der Hülsen anlegbar sein. Hierbei ist von Vorteil, daß sich eine vollständige Abdichtung des gesamten Spalts zwischen den beiden Maschinenelementen ergibt, auch wenn zumindest eines der Füllstücke bogenförmig ausgebildet ist. Die Innenseiten der Hülsen bilden jeweils ein Widerlager für den von den Füllstücken abgehobenen Dichtschlauch und verhindern dadurch unerwünscht große Dehnungen und eine daraus möglicherweise resultierende Beschädigung des Dichtschlauchs.

Die Füllstücke können biegsam und unkomprimierbar ausgebildet sein. Bevorzugt bestehen die Füllstücke jeweils aus einem polymeren Werkstoff. Die Füllstücke gelangen zur Anwendung um die ursprüngliche Gestalt des Dichtschlauchs und seinen Durchtrittsquerschnitt auch dann zu erhalten, wenn der Dichtschlauch beispielsweise bogenförmig innerhalb des ersten Maschinenelements verlegt ist. Ein Einknicken des Dichtschlauchs und daraus resultierend eine Verminderung des Durchtrittsquerschnitts wird durch die Füllstücke zuverlässig verhindert.

Nach einer weiteren Ausgestaltung kann es vorgesehen sein, daß der Dichtschlauch entlang seiner gesamten Länge eine Seele umschließt, deren Außendurchmesser kleiner als der Innendurchmesser des Dichtschlauchs ist und daß der dadurch gebildete Ringspalt eine Leitung für das Medium bildet. Die Seele kann beispielsweise schlauchförmig ausgebildet und biegsam sein. Bevorzugt besteht die Seele aus einem polymeren Werkstoff. Die Seele ist im wesentlichen als dickwandiger Schlauch ausgebildet. Hierdurch wird die erforderliche Flexibilität erreicht. Gleichzeitig wird durch diese Seele eine nachteilige Knickung des eigentlichen Dichtungsschlauchs im Übergang von der Hülse in die Nut verhindert. Durch den Ringspalt wird das Medium in den Dichtschlauch eingeleitet. Durch eine ausreichende Einstecklänge des Dichtschlauchs im Bereich seiner beiden Stirnseiten in die Hülse ist zur Erzielung der Dichtung gegen Leckage eine Vorspannung oder Verpressung zwischen dem Außendurchmesser der Seele, dem Innendurchmesser des Dichtschlauchs, dem Außendurchmesser des Dichtschlauchs und dem Innendurchmesser der Hülse nicht erforderlich.

Die Hülsen sind im Bereich der jeweiligen Enden des Dichtschlauchs auf den einander zugewandten Seiten entsprechend der Kontur des Dichtschlauchs ausgeschnitten. Dies ist erforderlich, um den Dichtschlauch von der Ausnehmung innerhalb des ersten Maschinenelements, in der die Hülse angeordnet ist und die sich quer zur Längsrichtung der Nut erstreckt, in die Nut umlenken zu können.

Die Hülsen sind mit den jeweiligen Ausnehmungen des ersten Maschinenelements jeweils dichtend verbunden, beispielsweise bevorzugt verklebt. Die auf der der zweiten Oberfläche abgewandten Seite der Hülse eingeleitete Luft ist daher gezwungen, durch die leitungsförmige Ausnehmung des einen Füllstücks in den Dichtschlauch zu strömen. Außerdem werden durch die dichtende Verklebung der Hülse mit der Ausnehmung Leckagen vermieden, so daß der Überdruck innerhalb des Dichtschlauchs rasch aufgebaut werden kann und bedarfsweise während einer langen Gebrauchsdauer unverändert erhalten bleibt.

Die Nut kann auf der der zweiten Oberfläche des zweiten Maschinenelements zugewandten Seite im Bereich ihrer Mündung verengt sein. Hierdurch wird verhindert, daß der Dichtschlauch unbeabsichtigt aus der Nut herausfällt. Der Öffnungsquerschnitt der Nut ist derart dimensioniert, daß der nichtdruckbeaufschagte Dichtschlauch formschlüssig innerhalb der Nut gehalten ist.

Gemäß einer weiteren, vorteilhaften Ausgestaltung kann es vorgesehen sein, daß im Nutgrund der Nut eine Vakuumnut angeordnet ist, deren Länge im wesentlichen der Länge des Dichtschlauchs zwischen den Füllstücken entspricht, wobei die Vakuumnut mit Unterdruck beaufschlagbar ist. Durch eine derartige Ausgestaltung wird verhindert, daß der Dichtschlauch aufgrund seiner Relativbewegung zur Nut aus dieser herauswandert. Außerdem wird der Dichtschlauch im nicht-druckbeaufschlagten Zustand durch die Vakuumbeaufschlagung an den Nutgrund der Nut gezogen, so daß die der zweiten Oberfläche zugewandte Seite des Dichtschlauchs dann vollständig innerhalb der Nut angeordnet ist.

Nach dem Entlüften des Dichtschlauchs wird die Nut einschließlich der Vakuumnut kurzzeitig mit Unterdruck beaufschlagt. Hierdurch wird die Rückstellung der Schlauchdichtung in ihre Ausgangsdimensionen unterstützt.

Gleichzeitig wird das gesamte Profil des Dichtschlauchs in die Nut zurückgezogen.

Das erste Maschinenelement kann als Werkzeugunterteil und das zweite Maschinenelement als Werkzeugoberteil ausgebildet sein. Bevorzugt gelangt die Dichtvorrichtung in Formwerkzeugen zur Herstellung von Formteilen aus Kunststoff zur Anwendung. Obwohl ein Formwerkzeug zur Herstellung von Formteilen aus Kunststoff aus mehreren Klappen und Schiebern bestehen kann, um das fertige Formteil im Anschluß an seine Herstellung ausformen zu können, werden durch die erfindungsgemäße Dichtvorrichtung durchgängige Dichtflächen erzeugt, ohne daß im nicht-druckbeaufschlagten Zustand des Dichtschlauchs Überstände über die Werkzeugoberfläche des ersten Maschinenelements entstehen.

### Kurzbeschreibung der Zeichnungen

Zwei Ausführungsbeispiele der erfindungsgemäßen Dichtvorrichtung werden nachfolgend anhand der Zeichnungen weiter verdeutlicht. Diese zeigen jeweils in schematischer Darstellung:
- Figur 1: ein erstes Ausführungsbeispiel der erfindungsgemäßen Dichtvorrichtung in geschnittener Darstellung,
- Figur 2: den Schnitt A-A aus Figur 1 und
- Figur 3: den Schnitt B-B aus Figur 1.
- Figur 4: ein zweites Ausführungsbeispiel der erfindungsgemäßen Dichtvorrichtung in geschnittener Darstellung.

### Ausführung der Erfindung

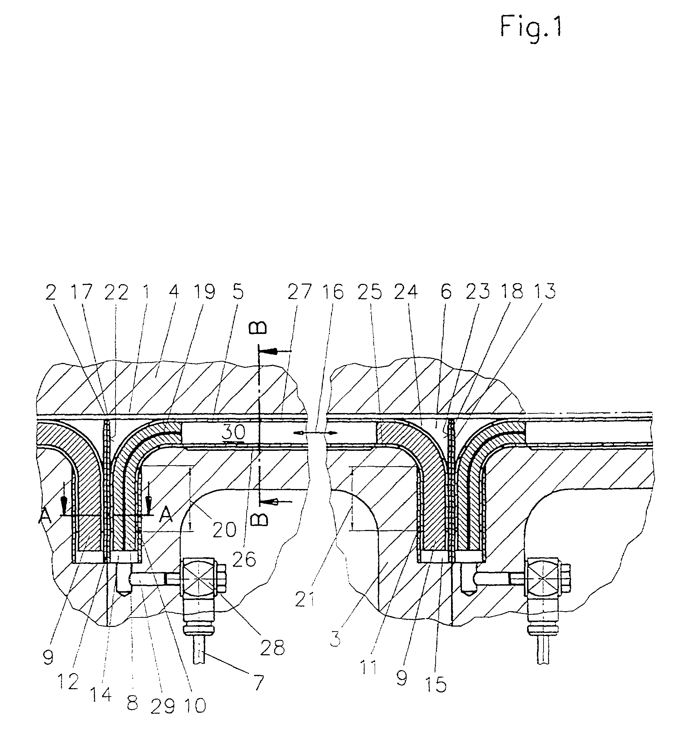

In Figur 1 ist ein Ausführungsbeispiel der erfindungsgemäßen Dichtvorrichtung gezeigt. Das Werkzeug besteht aus mehreren Werkzeugunterteilen und aus einem Werkzeugoberteil, wobei das Werkzeug als Formwerkzeug zur Herstellung von Formteilen aus Kunststoff ausgebildet ist.

Die Dichtvorrichtung ist im nicht-druckbeaufschlagten Zustand gezeigt; der aufgeblähte Dichtschlauch 5 ist in Strich-zweipunktierter Linie dargestellt.

Das erste Maschinenelement 3 weist eine erste Oberfläche 1 auf, die der zweiten Oberfläche 2 des zweiten Maschinenelements 4 mit Abstand benachbart zugeordnet ist. Der durch den Abstand gebildete Spalt 27 ist während der bestimmungsgemäßen Verwendung des Werkzeugs durch einen Dichtschlauch 5 abzudichten. Die Dichtvorrichtung umfaßt im wesentlichen den aufblähbaren Dichtschlauch 5 aus elastomerem Werkstoff. Innerhalb des ersten Maschinenelements 3 ist eine in Richtung des zweiten Maschinenelements 4 offene Nut 6 angeordnet, in der der Dichtschlauch 5 positioniert ist.

Im Bereich seiner beiden Enden 10, 11 umschließt der Dichtschlauch 5 jeweils ein Füllstück 8, 9 unter elastischer Vorspannung dichtend, wobei jedes der Füllstücke 8, 9 in diesem Ausführungsbeispiel aus einem polymeren Werkstoff besteht und biegsam sowie im wesentlichen unkomprimierbar ausgebildet ist. Nur eines der Füllstücke 8 ist mit einer leitungsförmigen Ausnehmung 19 versehen, die den Hohlraum des Dichtschlauchs 5 zwischen den Füllstücken 8, 9 mit einem Druckluftanschluß 28 verbindet. Der Druckluftanschluß 28 ist in eine Anschlußbohrung 29 geschraubt, wobei bei Druckbeaufschlagung Druckluft vom Druckluftanschluß 28 durch die Anschlußbohrung 29 und die Ausnehmung 19 innerhalb des ersten Füllstücks 8 in den Hohlraum 30 des Dichtschlauchs 5 zwischen den beiden Formstücken 8, 9 gelangt. Das zweite Füllstück 9 ist dichtend innerhalb des Dichtschlauchs 5 angeordnet.

Die beiden stirnseitigen Enden 10, 11 des Dichtschlauchs 5 sind außenumfangsseitig jeweils von einer Hülse 12, 13 umschlossen, die in eine entsprechende Ausnehmung 14, 15 des ersten Maschinenelements 3 dichtend eingeklebt ist.

Die Hülsen 12, 13 sind quer zur Längsrichtung 16 der Nut angeordnet und schließen mit ihren der zweiten Oberfläche zugewandten Stirnseiten 17, 18 und dem nicht-druckbeaufschagten Dichtschlauch 5 bündig mit der ersten Oberfläche 1 des ersten Maschinenelements 3 ab.

Die Hülsen 12, 13 erstrecken sich auf den einander abgewandten Seiten bis zur ersten Oberfläche 1, wobei die einander zugewandten Seiten kürzer ausgebildet und ausgeschnitten sind. Außerhalb der Bereiche der Einspannung 22, 23 sind die einander zugewandten Seiten der Hülsen 12, 13 so ausgeschnitten, daß der Dichtschlauch 5 im wesentlichen rechtwinklig abgewinkelt in die Nut 6 umlenkbar ist.

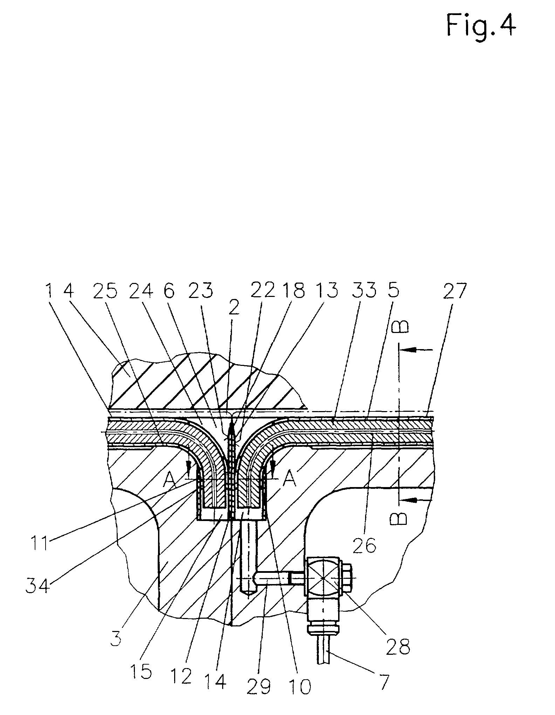

Die Nut 6 des Maschinenelements 3 ist auf der der zweiten Oberfläche 2 des zweiten Maschinenelements 4 zugewandten Seite in diesem Ausführungsbeispiel von einer Schutzfolie 32 dichtend überdeckt und hat zur zweiten Oberfläche 2 des zweiten Maschinenelements 4 einen spaltförmigen Abstand 27. Eine Schutzfolie 32 für den Dichtschlauch 5 bildet beispielsweise das Oberflächenmaterial eines in einem Schäumwerkzeug herzustellenden Artikels, zum Beispiel eine Armaturentafel für ein Kraftfahrzeug. Der Dichtschlauch 5, der formschlüssig innerhalb der Nut 6 angeordnet ist, wird zu einem vorbestimmten Zeitpunkt mit einem druckbeaufschlagbaren Medium befüllt. Durch das Befüllen des Dichtschlauchs 5 mit druckbeaufschlagtem Medium 7 wird dieser aus der Nut 6 heraus über die Oberfläche 1 hinaus gegen die zweite Oberfläche 2 des zweiten Maschinenelements 4 entlang seiner gesamten Längsausdehnung aufgebläht und mittels der Schutzfolie 32 dichtend angelegt. In Figur 1 ist die Dichtvorrichtung im nicht-druckbeaufschlagten Zustand gezeigt. Bei Druckbeaufschlagung wird der aufgeblähte Dichtschlauch 5 bis an die Innenkanten der Hülsen 12, 13 gedehnt. Diese Ausdehnung erfolgt oberhalb der Enden der Hülsen 12, 13 im Spaltbereich 27 derart, daß hier die gedehnten Oberflächen der umfangsseitig aneinander angrenzenden Dichtschläuche 5 unmittelbar aneinander anliegen, wie beispielsweise in Figur 4 gezeigt.

Das Werkzeugunterteil und das Werkzeugoberteil bestehen in diesem Ausführungsbeispiel aus Kunstharz, wobei die Hülsen 12, 13 in die Ausnehmungen 14, 15 dichtend eingeklebt sind.

Abweichend davon können auch Werkzeugober- und -unterteile aus metallischen Werkstoffen zur Anwendung gelangen. Die Hülsen 12, 13 können beispielsweise ebenfalls eingeklebt werden. Nach einer anderen Ausgestaltung besteht die Möglichkeit, die Hülsen 12, 13 durch eine zusätzliche mechanische Befestigung, beispielsweise eine Verschraubung, unter Verwendung von Dichtmitteln zu befestigen. Die Hülsen 12, 13 können so gestaltet sein, daß sich gleichzeitig der Luftanschluß für die Druckmittelzuführung in diesem Endstück befindet.

Von entscheidender Wichtigkeit ist, daß durch die erfindungsgemäße Ausbildung der Dichtvorrichtung die Möglichkeit besteht, daß sich der Dichtschlauch jeweils bis zu den Innenseiten 22, 23 der beiden Hülsen 12, 13 erstreckt und dadurch im aufgeblähten Zustand für eine durchgängige Dichtfläche an der zweiten Oberfläche 2 sorgt. Dieser Betriebszustarid ist in Figur 4 gezeigt.

Im Anschluß an die Herstellung des Werkstücks wird der Überdruck innerhalb des Dichtschlauchs 5 allmählich vermindert, so daß der Dichtschlauch 5 anschließend wieder die in Figur 1 dargestellte Form annimmt und in die Nut 6 zurückkehrt. Um die Bewegung des Dichtschlauchs 5 in die Nut 6 zu unterstützen, ist in dem hier gezeigten Ausführungsbeispiel eine Vakuumnut 26 vorgesehen, die vom Nutgrund 25 der Nut 6 ausgeht. Die Vakuumnut 26 ist mit einem Unterdruck beaufschlagbar, der den Dichtschlauch 5 auf den Nutgrund 25 zieht.

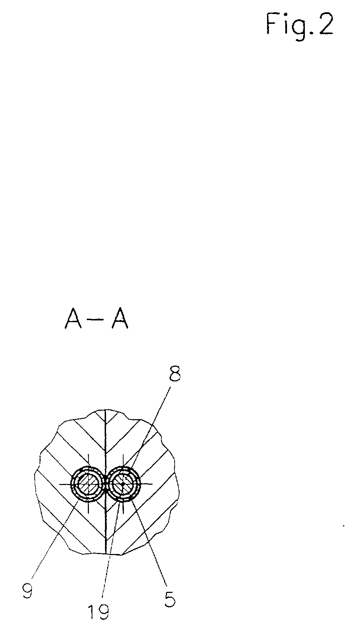

In Figur 2 ist der Schnitt A-A aus Figur 1 gezeigt. Innerhalb des Einspannbereichs 20, 21 sind die Enden 10, 11 des Dichtschlauchs 5 und die darin angeordneten Füllstücke 8, 9 unter elastischer Vorspannung von den Hülsen 12, 13 dichtend umschlossen. Das erste Füllstück 8 weist im Gegensatz zum zweiten Füllstück 9 die leitungsförmige Ausnehmung 19 auf.

Die beiden Hülsen 12, 13 sind innerhalb der Ausnehmungen 14, 15 des ersten Maschinenelements 3 luftdicht eingeklebt.

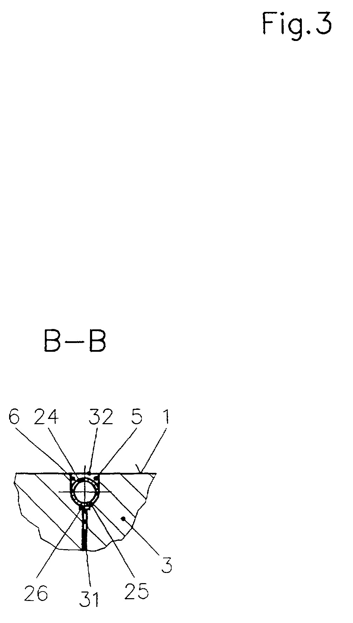

In Figur 3 ist der Schnitt B-B aus Figur 1 gezeigt. Hier ist zu erkennen, daß weder der Dichtschlauch 5 im nicht-druckbeaufschlagten Zustand noch die Hülse 12 über die erste Oberfläche 1 in Richtung der zweiten Oberfläche 2 herausragt.

Der Dichtschlauch 5 ist formschlüssig innerhalb der Nut 6 angeordnet, da die Nut 6 auf der der zweiten Oberfläche 2 zugewandten Seite im Bereich ihrer Mündung 24 verengt ist.

Auf der der Mündung 24 abgewandten Seite ist die Vakuumnut 26 angeordnet, wobei der Unterdruckanschluß mit der Bezugsziffer 31 versehen und schematisch dargestellt ist.

In Figur 4 ist ein zweites Ausführungsbeispiel gezeigt, daß sich von dem zuvor beschriebenen Ausführungsbeispiel im wesentlichen dadurch unterscheidet, daß der Dichtschlauch 5 entlang seiner gesamten Länge eine Seele 33 umschließt, deren Außendurchmesser kleiner als der Innendurchmesser des Dichtschlauchs 5 ist und daß der dadurch gebildete Ringspalt 34 eine Leitung für das Medium 7 bildet. Bei Druckbeaufschlagung des Dichtschlauchs 5 hebt dieser von der Seele 33 ab und nimmt die Strich-zweipunktierte Gestalt an. Es ist zu erkennen, daß sich die einander benachbarten Schläuche oberhalb der Hülsen 12, 13 dichtend berühren.

## Patentansprüche

1. Dichtvorrichtung zur Abdichtung von zumindest zwei einander zugewandten Oberflächen (1, 2) zweier benachbarter Maschinenelemente (3, 4), umfassend einen aufblähbaren Dichtschlauch (5), ein erstes und ein zweites Maschinenelement (3, 4) und ein Einsatzstück, wobei der Dichtschlauch in einer in der ersten Oberfläche (1) des ersten Maschinenelements (3) angeordneten und in Richtung der zweiten Oberfläche (2) des zweiten Maschinenelements (4) offenen Nut (6) angeordnet ist, wobei der Dichtschlauch (5) mit einem druckbaufschlagbaren Medium befüllbar und durch das Medium aufblähbar sowie an die zweite Oberfläche (2) des zweiten Maschinenelements (4) dichtend anlegbar ist und wobei die stirnseitigen Enden (10, 11) des Dichtschlauchs (5) jeweils in dem Einsatzstück angeordnet sind, **dadurch gekennzeichnet, daß** die Einsatzstücke jeweils als Hülse (12, 13) ausgebildet sind, die die stirnseitigen Enden (10, 11) des Dichtschlauchs (5) unter elastischer Vorspannung dichtend umschließen, daß die Hülsen (12, 13) in jeweils einer Ausnehmung (14, 15) des ersten Maschinenelements (3) angeordnet sind, die sich im wesentlichen quer zur Längsrichtung (16) der Nut (6) erstrecken und daß der nicht-druckbeaufschlagte Dichtschlauch (5) und die der zweiten Oberfläche (2) des zweiten Maschinenelements (4) jeweils zugewandte Stirnseite (17, 18) der Hülsen (12, 13) im wesentlichen bündig mit der ersten Oberfläche (1) des ersten Maschinenelements (3) abschließen.

2. Dichtvorrichtung nach Anspruch 1, **dadurch gekennzeichnet, dass** der Dichtschlauch (5) von einer Schutzfolie (32) überdeckt ist.

3. Dichtvorrichtung nach Anspruch 1, **dadurch gekennzeichnet, daß** der aufgeblähte Dichtschlauch (5) das zweite Maschinenelement (4) entlang seiner gesamten Längsausdehnung dichtend anliegend berührt.

4. Dichtvorrichtung nach Anspruch 2, **dadurch gekennzeichnet, daß** der aufgeblähte Dichtschlauch (5) die Schutzfolie (32) entlang seiner gesamten Längsausdehnung anliegend berührt.

5. Dichtvorrichtung nach einem der Ansprüche 1 bis 4, **dadurch gekennzeichnet, daß** der Dichtschlauch (5) stirnseitig beiderseits jeweils ein Füllstück (8, 9) unter elastischer Vorspannung dichtend umschließt.

6. Dichtvorrichtung nach Anspruch 5, **dadurch gekennzeichnet, daß** nur eines der Füllstücke (8) eine leitungsförmige Ausnehmung (19) aufweist, durch die das Medium (7) in den Dichtschlauch (5) einspeisbar ist.

7. Dichtvorrichtung nach einem der Ansprüche 5 oder 6, **dadurch gekennzeichnet, daß** die Füllstücke (8, 9) biegsam und unkomprimierbar ausgebildet sind.

8. Dichtvorrichtung nach einem der Ansprüche 5 bis 7, **dadurch gekennzeichnet, daß** die Füllstücke (8, 9) jeweils aus einem polymeren Werkstoff bestehen.

9. Dichtvorrichtung nach einem der Ansprüche 1 bis 8, **dadurch gekennzeichnet, daß** der Dichtschlauch (5) außerhalb des Bereichs seiner Hülseneinspannung (20, 21) von den Füllstücken (8, 9) abhebbar und an die Innenseite (22, 23) der Hülsen (12, 13) anlegbar ist.

10. Dichtvorrichtung nach einem der Ansprüche 1 bis 4, **dadurch gekennzeichnet, daß** der Dichtschlauch (5) entlang seiner gesamten Länge eine Seele (33) umschließt, deren Außendurchmesser kleiner als der Innendurchmesser des Dichtschlauchs (5) ist und daß der dadurch gebildete Ringspalt (34) eine Leitung für das Medium (7) bildet.

11. Dichtvorrichtung nach Anspruch 10, **dadurch gekennzeichnet, daß** die Seele (33) schlauchförmig ausgebildet und biegsam ist.

12. Dichtvorrichtung nach einem der Ansprüche 10 oder 11, **dadurch gekennzeichnet, daß** die Seele (33) aus einem polymeren Werkstoff besteht.

13. Dichtvorrichtung nach einem der Ansprüche 1 bis 12, **dadurch gekennzeichnet, daß** die Hülsen (12, 13) im Bereiche der jeweiligen Enden (10, 11) des Dichtschlauchs (5) auf den einander zugewandten Seiten entsprechend der Kontur des Dichtschlauches (5) ausgeschnitten sind.

14. Dichtvorrichtung nach einem der Ansprüche 1 bis 13, **dadurch gekennzeichnet, daß** die Hülsen (12, 13) mit den jeweiligen Ausnehmungen (14, 15) des ersten Maschinenelements (3) verklebt sind.

15. Dichtvorrichtung nach einem der Ansprüche 1 bis 14, **dadurch gekennzeichnet, daß** die Nut (6) auf der der zweiten Oberfläche (2) des zweiten Maschinenelements (4) zugewandten Seite im Bereich ihrer Mündung (24) verengt ist.

16. Dichtvorrichtung nach einem der Ansprüche 1 bis 15, **dadurch gekennzeichnet, daß** im Nutgrund (25) der Nut (6) eine Vakuumnut (26) angeordnet ist, deren Länge im wesentlichen der Länge des Dichtschlauchs (5) zwischen den Füllstücken (8, 9) entspricht, wobei die Vakuumnut (26) mit Unterdruck beaufschlagbar ist.

17. Dichtvorrichtung nach einem der Ansprüche 1 bis 16, **dadurch gekennzeichnet, daß** das erste Maschinenelement (3) als Werkzeugunterteil und das zweite Maschinenelement (4) als Werkzeugoberteil ausgebildet ist.

## Claims

1. A sealing device for sealing off at least two mutually confronting surfaces (1, 2) of two adjacent machine elements (3, 4), comprising an inflatable sealing hose (5), a first and a second machine element (3, 4) and an insert piece, the sealing hose being arranged in a groove (6) arranged in the first surface (1) of the first machine element (3) and open in the direction of the second surface (2) of the second machine element (4), the sealing hose (5) being capable of being filled with a pressure-loadable medium and being inflatable by means of the medium and also being capable of being laid sealingly onto the second surface (2) of the second machine element (4), and the fore ends (10, 11) of the sealing hose (5) being arranged in each case in the insert piece, **characterized in that** the insert pieces are designed in each case as sleeves (12, 13) which surround the fore ends (10, 11) of the sealing hose (5) sealingly under elastic prestress, **in that** the sleeves (12, 13) are arranged in each case in a recess (14, 15) of the first machine element (3), the said recesses extending essentially transversely to the longitudinal direction (16) of the groove (6), and **in that** the non-pressure-loaded sealing hose (5) and the end face (17, 18) of the sleeves (12, 13) which in each case confronts the second surface (2) of the second machine element (4) terminate essentially flush with the first surface (1) of the first machine element (3).

2. A sealing device according to claim 1, **characterized in that** the sealing hose (5) is covered by a protective film (32).

3. A sealing device according to claim 1, **characterized in that** the inflated sealing hose (5), along its entire longitudinal extent, touches the second machine element (4) by lying sealingly against the latter.

4. A sealing device according to claim 2, **characterized in that** the inflated sealing hose (5), along its entire longitudinal extent, touches the protective film (32) by lying against the latter.

5. A sealing device according to any one of claims 1 to 4, **characterized in that** the sealing hose (5), under elastic prestress, sealingly surrounds in each case one filler piece (8, 9) at the end face on both sides.

6. A sealing device according to claim 5, **characterized in that** only one of the filler pieces (8) has a conduit-shaped recess (19), through which the medium (7) can be fed into the sealing hose (5).

7. A sealing device according to either one of claims 5 and 6, **characterized in that** the filler pieces (8, 9) are of flexible and incompressible design.

8. A sealing device according to any one of claims 5 to 7, **characterized in that** the filler pieces (8, 9) in each case comprise a polymeric material.

9. A sealing device according to any one of claims 1 to 8, **characterized in that** the sealing hose (5), outside the region of its sleeve clamping (20, 21), can be lifted off from the filler pieces (8, 9) and can be laid against the inside (22, 23) of the sleeves (12, 13).

10. A sealing device according to any one of claims 1 to 4, **characterized in that** the sealing hose (5), along its entire length, surrounds a core (33), the outside diameter of which is smaller than the inside diameter of the sealing hose (5), and **in that** the annular gap (34) formed thereby constitutes a conduit for the medium (7).

11. A sealing device according to claim 10, **characterized in that** the core (33) is of tubular design and is flexible.

12. A sealing device according to either one of claims 10 and 11, **characterized in that** the core (33) comprises a polymeric material.

13. A sealing device according to any one of claims 1 to 12, **characterized in that**, in the region of the respective ends (10, 11) of the sealing hose (5), the sleeves (12, 13) are cut out, on the mutually confronting sides, according to the contour of the sealing hose (5).

14. A sealing device according to any one of claims 1 to 13, **characterized in that** the sleeves (12, 13) are adhesively bonded to the respective recesses (14, 15) of the first machine element (3).

15. A sealing device according to any one of claims 1 to 14, **characterized in that**, on the side confronting the second surface (2) of the second machine element (4), the groove (6) is narrowed in the region of its issue (24).

16. A sealing device according to any one of claims 1 to 15, **characterized in that** the groove bottom (25) of the groove (6) has arranged in it a vacuum groove (26), the length of which corresponds essentially to the length of the sealing hose (5) between the filler pieces (8, 9), the vacuum groove (26) being capable of being loaded with underpressure.

17. A sealing device according to any one of claims 1 to 16, **characterized in that** the first machine element (3) is designed as a tool lower part and the second machine element (4) as a tool upper part.

## Revendications

1. Dispositif d'étanchéité pour l'étanchéité d'au moins deux surfaces (1, 2), tournées l'une vers l'autre, de deux éléments de machine (3, 4) voisins, comprenant un flexible d'étanchéité (5) pouvant être gonflé, un premier et un second éléments de machine (3, 4) et une pièce d'insertion, le flexible d'étanchéité étant disposé dans une rainure (6) disposée dans la première surface (1) du premier élément de machine (3) et ouverte en direction de la seconde surface (2) du second élément de machine (4), le flexible d'étanchéité (5) pouvant être rempli avec un agent pouvant être alimenté en pression et pouvant être gonflé par cet agent et pouvant être mis de façon étanche contre la seconde surface (2) du second élément de machine (4) et les extrémités (10, 11) côté avant du flexible d'étanchéité (5) étant disposées respectivement dans la pièce d'insertion, **caractérisé en ce que** les pièces d'insertion sont conçues chacune comme une douille (12, 13), qui entourent de façon étanche les extrémités côté avant (10, 11) du flexible d'étanchéité (5) en formant une prétension élastique de telle sorte que les douilles (12, 13) sont disposées chacune dans un évidement (14, 15) du premier élément de machine (3), lesquelles s'étendent sensiblement transversalement à la direction longitudinale (16) de la rainure (6) et **en ce que** le flexible d'étanchéité (5) non alimenté en pression et le côté avant (17, 18), tourné respectivement vers la seconde surface (2) du second élément de machine (4), des douilles (12, 13) se terminent sensiblement en affleurement avec la première surface (1) du premier élément de machine (3).

2. Dispositif d'étanchéité selon la revendication 1, **caractérisé en ce que** le flexible d'étanchéité (5) est recouvert d'un film protecteur (32).

3. Dispositif d'étanchéité selon la revendication 1, **caractérisé en ce que** le flexible d'étanchéité (5) gonflé touche le second élément de machine (4) en s'appuyant de façon étanche le long de l'ensemble de son extension longitudinale.

4. Dispositif d'étanchéité selon la revendication 2, **caractérisé en ce que** le flexible d'étanchéité (5) gonflé touche le film protecteur (32) en s'appuyant le long de l'ensemble de son extension longitudinale.

5. Dispositif d'étanchéité selon l'une quelconque des revendications 1 à 4, **caractérisé en ce que** le flexible d'étanchéité (5) entoure de façon étanche sur l'avant et sur chacun des deux côtés une pièce de remplissage (8, 9) en formant une prétension élastique.

6. Dispositif d'étanchéité selon la revendication 5, **caractérisé en ce que** seulement l'une des pièces de remplissage (8) présente un évidement (19) en forme de conduite, par lequel l'agent (7) peut être injecté dans le flexible d'étanchéité (5).

7. Dispositif d'étanchéité selon l'une quelconque des revendications 5 ou 6, **caractérisé en ce que** les pièces de remplissage (8, 9) sont conçues de façon souple et non comprimable.

8. Dispositif d'étanchéité selon l'une quelconque des revendications 5 à 7, **caractérisé en ce que** les pièces de remplissage (8, 9) sont respectivement à base d'un matériau polymère.

9. Dispositif d'étanchéité selon l'une quelconque des revendications 1 à 8, **caractérisé en ce que** le flexible d'étanchéité (5) peut être soulevé des pièces de remplissage (8, 9) à l'extérieur de la zone de son serrage de douille intérieur (20, 21) et peut être placé contre le côté intérieur (22, 23) des douilles (12, 13).

10. Dispositif d'étanchéité selon l'une quelconque des revendications 1 à 4, **caractérisé en ce que** le flexible d'étanchéité (5) entoure le long de toute sa longueur une âme (33) dont le diamètre extérieur est inférieur au diamètre intérieur du flexible d'étanchéité (5) et **en ce que** la fente annulaire (34) ainsi formée forme une conduite pour l'agent (7).

11. Dispositif d'étanchéité selon la revendication 10, **caractérisé en ce que** l'âme (33) est conçue en forme de flexible et est souple.

12. Dispositif d'étanchéité selon l'une quelconque des revendications 10 ou 11, **caractérisé en ce que** l'âme (33) est à base d'un matériau polymère.

13. Dispositif d'étanchéité selon l'une quelconque des revendications 1 à 12, **caractérisé en ce que** les douilles (12, 13) sont découpées dans la zone des extrémités (10, 11) respectives du flexible d'étanchéité (5) sur les côtés tournés les uns vers les autres en fonction du contour du flexible d'étanchéité (5).

14. Dispositif d'étanchéité selon l'une quelconque des revendications 1 à 13, **caractérisé en ce que** des douilles (12, 13) sont collées avec les évidements (14, 15) respectifs du premier élément de machine (3).

15. Dispositif d'étanchéité selon l'une quelconque des revendications 1 à 14, **caractérisé en ce que** la rainure (6) est rétrécie sur le côté, tourné vers la seconde surface (2), du second élément de machine (4) dans la zone de son débouché (24).

16. Dispositif d'étanchéité selon l'une quelconque des revendications 1 à 15, **caractérisé en ce que** dans le fond de rainure (25) de la rainure (6) est disposée une rainure à vide (26), dont la longueur correspond sensiblement à la longueur du flexible d'étanchéité (5) entre les pièces de remplissage (8, 9), la rainure à vide (26) pouvant être alimentée avec de la dépression.

17. Dispositif d'étanchéité selon l'une quelconque des revendications 1 à 16, **caractérisé en ce que** le premier élément de machine (3) est conçu comme une partie inférieure d'outil et le second élément de machine (4) comme une partie supérieure d'outil.
